# EUROPEAN PATENT SPECIFICATION

(11) **EP 3 228 442 B1**
(45) Date of publication and mention of the grant of the patent: **12.09.2018**
(21) Application number: 15865354.3
(22) Date of filing: 01.12.2015
(51) Int. Cl.: B29D 30/30, B29D 30/16, B29D 30/06, B60C 5/14, B29D 30/42

(54) **PNEUMATIC TIRE AND METHOD FOR MANUFACTURING SAME**
LUFTREIFEN UND VERFAHREN ZUR HERSTELLUNG DAVON
PNEU ET SON PROCÉDÉ DE FABRICATION

(30) Priority: 01.12.2014 JP 2014243336
(43) Date of publication of application: 11.10.2017
(73) Proprietor: Bridgestone Corporation, Tokyo 104-8340 (JP)
(72) Inventor: HASHIMOTO, Masashi, Tokyo 104-8340 (JP)
(74) Representative: Oxley, Robin John George
(86) International application number: PCT/JP2015/005973
(87) International publication number: WO 2016/088365

(56) References cited:
- EP-A1- 2 657 044
- WO-A1-2014/175174
- JP-A- 2005 238 759
- JP-A- 2008 168 846
- JP-A- 2009 208 444
- JP-A- 2009 208 444
- JP-A- 2012 171 253
- JP-A- 2013 141 758
- JP-A- 2013 141 758
- US-A1- 2010 181 000

## Description

### TECHNICAL FIELD

The present disclosure relates to a pneumatic tire and a method for manufacturing the same.

### BACKGROUND ART

There has been conventionally used a rubber composition containing as a primary raw material thereof butyl rubber, halogenated butyl rubber or the like for an inner liner provided as an air barrier layer at the inner surface of a pneumatic tire (which tire will occasionally be referred to simply as a "tire" hereinafter) for retaining internal pressure of the tire. In a case where such a rubber composition containing butyl-based rubber as a primary raw material thereof as described above is used for an inner liner, the inner liner must have thickness of around 1 mm in order to ensure satisfactory air barrier properties thereof.

In this respect, it is known that a thermoplastic resin such as ethylene-vinyl alcohol copolymer (EVOH) has excellent gas barrier properties, i.e. air permeability equal to or less than 1/100 of that of the aforementioned butyl-based rubber composition for an inner liner, thereby as an inner liner of a tire enabling significantly improving the internal pressure retainability of the tire even when thickness of the inner liner is 100 µm or less. PTL 1, for example, discloses a pneumatic tire having an inner liner made of EVOH.

### Patent Literature

PTL 1: JP2008-168846. Attention is also drawn to the disclosures of EP2,657,044, WO2014/175174 and JP2013 141858.

### SUMMARY

It is known as one of manufacturing defects of pneumatic tires what is called "residual air" which, originally contained within a green tire, accumulates during tire-building and vulcanizing processes to form air reservoir and remain inside the tire thus built and vulcanized. In a case of a pneumatic tire having an inner liner using a thermoplastic resin such as EVOH in particular, air hardly permeates through the thermoplastic resin, whereby air remaining inside the tire is not easily discharged and tends to stay as residual air in the tire.
In view of this, an object of the present disclosure is to provide a pneumatic tire capable of suppressing formation of residual air reservoir therein in a tire-building process and thus improving manufacturing quality thereof, while maintaining satisfactorily air sealing properties, and a method for manufacturing a pneumatic tire which method enables obtaining said pneumatic tire.

### SUMMARY

In order to achieve the object, a pneumatic tire according to the present disclosure is a pneumatic tire having a carcass layer extending across a pair of bead cores and an inner liner layer formed of a thermoplastic resin and provided on the tire inner surface side of the carcass layer, wherein:
the inner liner layer and a rubber layer provided on the side facing the carcass layer, of the inner liner layer, form a composite layer in combination;
respective end portions in the tire circumferential direction of the composite layer are jointed in the tire circumferential direction in an overlapping manner at a joint portion of the composite layer;
the lower inner liner layer, situated on the lower side or the tire inner surface side of the overlapping end portions of the composite layer, has a "first edge" at the joint portion;
the upper inner liner layer, situated on the upper side of the overlapping end portions of the composite layer, has a "second edge" at the joint portion;
the first edge of the lower inner liner layer is separated from the upper inner liner layer by the rubber layer;
provided that a position in the tire circumferential direction on the upper inner liner layer at the same height in the tire radial direction as the lower inner liner layer, at which position the upper inner liner layer is closest to the first edge of the lower inner liner layer, is "P", a distance in the tire circumferential direction measured from the first edge to the position P is "L", and a distance in the tire circumferential direction measured from the second edge to the position P is "T", T ≤ 35 mm, T -L/2 ≥ 9 mm, and 0 × T < L ≤ 0.2 × T.

Further, a method for manufacturing a pneumatic tire according to the present disclosure is a method for manufacturing a pneumatic tire having a carcass layer extending across a pair of bead cores and an inner liner layer formed of a thermoplastic resin and provided on the tire inner surface side of the carcass layer, wherein the inner liner layer and a rubber layer provided on the side facing the carcass layer, of the inner liner layer, form a composite layer in combination, and respective end portions in the tire circumferential direction of the composite layer are jointed in the tire circumferential direction in an overlapping manner at a joint portion, wherein
when the overlapping end portions of the composite layer at the joint portion is constituted of the lower composite layer situated on the lower side or the tire inner surface side and the upper composite layer situated on the upper side, the method comprises:
forming an end face of the rubber layer of the lower composite layer to be a slant face slanting from a lower edge of the rubber layer, on the outer side in the tire circumferential direction, toward the outer side in the tire radial direction; and
subjecting the tire to vulcanization in a state where the upper composite layer overlaps with the lower composite layer, to form the joint portion.

According to the present disclosure, it is possible to provide a pneumatic tire capable of suppressing formation of residual air reservoir therein in a tire-building process and thus improving manufacturing quality thereof, while maintaining satisfactorily air sealing properties, and a method for manufacturing a pneumatic tire which method enables obtaining said pneumatic tire.

### BRIEF DESCRIPTION OF THE DRAWINGS

In the accompanying drawings, wherein:
FIG. 1 is an explanatory view showing a cross section in the tire circumferential direction of a joint portion of an inner liner layer of a pneumatic tire according to one embodiment of the present disclosure; and
FIG. 2 is an explanatory view showing a cross section in the tire circumferential direction of a tire circumferential direction end face of a rubber layer of a lower composite layer, prior to the lower composite layer being overlapped by the upper composite layer at the joint portion as shown in FIG. 1.

### DETAILED DESCRIPTION

An embodiment for implementing the present disclosure will be described hereinafter hereinafter with reference to the drawings.

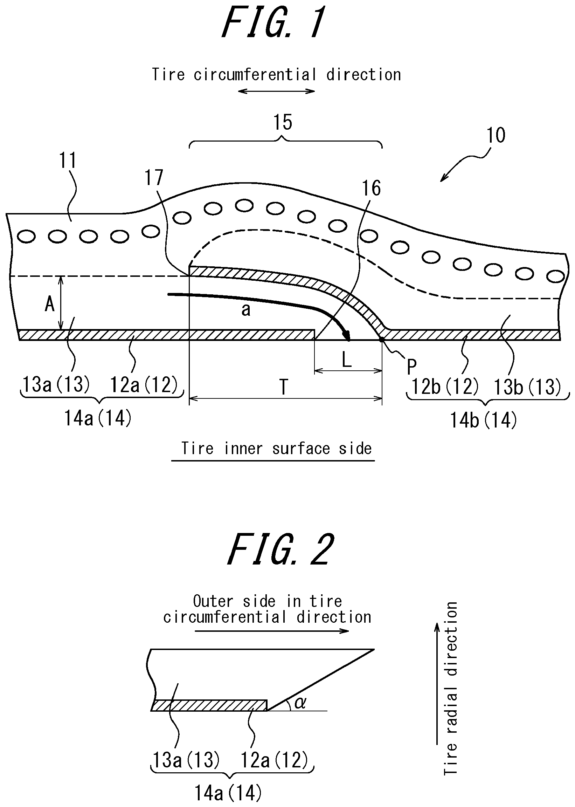

FIG. 1 is an explanatory view showing a cross section in the tire circumferential direction (a cross section on a plain orthogonal to the tire rotation axis) of a joint portion of an inner liner layer of a pneumatic tire according to one embodiment of the present disclosure. FIG. 1 shows a cross section in the tire circumferential direction in the vicinity of the tire equatorial plane and members generally provided in a pneumatic tire but other than an inner liner layer and a carcass layer, such as a belt layer, a tread and the like provided on the outer side in the tire radial direction of the carcass layer, are omitted therein.

As shown in FIG. 1, the pneumatic tire 10 according to the present embodiment has a carcass layer 11 extending in a toroidal shape across a pair of bead cores (not shown) and an inner liner layer 12 provided on the tire inner surface side of the carcass layer 11 along the carcass layer 11.
The carcass layer 11 is constituted of at least one carcass ply including radially-disposed cords therein in the pneumatic tire 10 of the present embodiment. However, the number and the structure of the carcass ply of the carcass layer 11 are not restricted to those of the present embodiment in the pneumatic tire of the present disclosure. Type of a material of the cords of the carcass ply of the carcass layer 11 is not particularly restricted, either, and applicable examples thereof include organic fibers and the like.

The inner liner layer 12, provided at the inner surface of the pneumatic tire to serve as an air permeation preventing layer, is made of a thermoplastic resin such as polyamide based resin, ethylene-vinyl alcohol based copolymer, modified ethylene-vinyl alcohol based copolymer, urethane based polymer, and the like. The inner liner layer 12 is formed by a resin film (i.e. the thermoplastic resin processed to be a film-like shape) and attached by an adhesive to a rubber member constituting the pneumatic tire in the present embodiment. Specifically, the inner liner layer 12 of the present embodiment is formed by a resin film made of ethylene-vinyl alcohol copolymer (EVOH) having low air permeability and being excellent in gas barrier properties in particular.

The inner liner layer 12 and a rubber layer 13 provided on the side facing the carcass layer 11, of the inner liner layer 12, form a composite layer 14 in combination. Respective end portions in the tire circumferential direction of the composite layer 14 are jointed in the tire circumferential direction in an overlapping manner at a joint portion 15 of the composite layer 14. That is, the respective end portions in the tire circumferential direction of the composite layer 14 overlap each other at the joint portion 15, so that the lower composite layer 14a (the lower inner liner layer 12a and the lower rubber layer 13a) situated on the tire inner surface side or the lower side in the tire radial direction of the overlapping end portions of the composite layer and the upper composite layer 14b (the upper inner liner layer 12b and the upper rubber layer 13b) situated on the upper side in the tire radial direction of the overlapping end portions of the composite layer, are laminated in the tire radial direction (see FIG. 1).

The inner liner layer 12 (precisely, the lower inner liner layer 12a) of the lower composite layer 14a has a first edge 16 as an edge in the tire circumferential direction at the joint portion 15. An edge in the tire circumferential direction of the rubber layer 13 (the lower rubber layer 13a) of the lower composite layer 14a is situated on an imaginary extension in the tire circumferential direction of the lower inner liner layer 12a and extends in the tire width direction, whereby the first edge 16 of the lower inner liner layer 12a is separated from the inner liner layer 12 (precisely, the upper inner liner layer 12b) of the upper composite layer 14b. In short, the lower rubber layer 13a exists between the first end 16 and the upper inner liner layer 12b and between the imaginary extension in the tire circumferential direction of the lower inner liner layer 12a and the upper inner liner layer 12b.

Further, in the joint portion 15, provided that: a position on the upper inner liner layer 12b at the same height in the tire radial direction as the lower inner liner layer 12a, at which position the upper inner liner layer 12b is closest to the first edge 16 of the lower inner liner layer 12a, i.e. a position in the tire circumferential direction on the upper inner liner layer 12b, which position is also on the imaginary extension in the tire circumferential direction of the lower inner liner layer 12a and at which position the upper inner liner layer 12b faces the first edge 16, is "P"; a distance in the tire circumferential direction measured from the first edge 16 to the position P is "L"; and a distance in the tire circumferential direction measured along the tire inner surface from a second edge 17 as an edge in the tire circumferential direction of the upper inner liner layer 12b to the position P is "T", the distance L is set to be equal to or less than 20% of the distance T.

It is possible to suppress formation of residual air reservoir (residual air reservoir tends to be formed when the respective end portions in the tire circumferential direction of the composite layer 14 are jointed in an overlapping manner to form the joint portion 15 in the tire-building and vulcanization processes because, for example, air which intruded into stepped portions in the joint portion 15 fails to be discharged and remains there) by separating the first edge 16 of the lower inner liner layer 12a from the upper inner liner layer 12b by the rubber layer 13 (precisely, the lower rubber layer 13a). In a case where the lower inner liner layer 12a and the upper inner liner layer 12b are in contact with each other, air which intruded into a space between the two inner liner layers 12a, 12b each made of a highly airtight thermoplastic resin cannot easily escape therefrom. These two inner liner layers 12a, 12b are, however, separated and prevented from making contact with each other by the rubber layer 13 and the rubber layer 13 is exposed on the tire inner surface side in the present embodiment, whereby the trapped air can safely escape by way of the rubber layer 13.

In this regard, too large separation distance between the two inner liner layers 12 may adversely affect the essentially required airtightness of the pneumatic tire. The distance L in the tire circumferential direction measured from the first edge 16 to the position P, i.e. the separation distance between the two inner liner layers 12a, 12b, is therefore set to be equal to or less than 20% of the distance T in the tire circumferential direction measured from the second edge 17 to the position P in the present embodiment, so that the separation does not adversely affect the air-sealing properties of the pneumatic tire. Setting the distance L in such a manner ensures a relatively long length at the overlapping portion of the respective end portions in the tire circumferential direction of the composite layer 14, i.e. a relatively long length in the tire circumferential direction of an escape passage (by way of the rubber layer 13) of residual air inside the tire during the tire-building and vulcanization processes, thereby ensuring that air once charged in the tire will not be easily released through the escape passage. For the same reason, it is preferable to set the distance L to be equal to or less than 10% of the distance T and more specifically to set the distance L to be 1 mm or less because then good airtightness is more satisfactorily ensured. The distance L exceeds 0 mm (0%) because the first edge 16 is separated from the upper inner liner layer 12b.

According to the pneumatic tire of the present disclosure, it is possible to effectively suppress formation of residual air reservoir during the tire-building and vulcanization processes and thus improve manufacturing quality of the tire by separating the two inner liner layers 12a, 12b by the rubber layer 13 which serves as an escape passage for residual air. Further, it is possible to maintain satisfactorily good air-sealing properties of the inner liner by setting the distance L to be equal to or less than 20% of the distance T. In particular, it is possible to make the escape passage for residual air as small as possible and achieve better airtightness by setting the distance L to be equal to or less than 10% of the distance T and/or setting the distance L to be 1 mm or less. Regarding a gauge A in the tire radial direction of the rubber layer 13 (precisely, the lower rubber layer 13a), the gauge A is to be smaller than the distance L. For example, the gauge A is preferably set to be equal to or less than 0.5 mm and more preferably equal to or less than 0.4 mm. This structure ensures satisfactorily narrow escape passage for residual air and thus satisfactorily good airtightness of the inner liner layer.

The distance T is preferably in the range of 10 mm ≤ T ≤ 35 mm, more preferably in the range of 10 mm ≤ T ≤ 20 mm, and further more preferably in the range of 10 mm ≤ T ≤ 15 mm. The distance T ≥ 10 mm ensures satisfactory air-sealing properties of the inner liner and the distance T ≤ 20 mm (preferably ≤ 15 mm) ensures satisfactory suppression of formation of residual air reservoir in the tire-building and vulcanization processes and thus further improvement of manufacturing quality of the tire.
Forming the rubber layer 13 of the composite layer 14 by the same rubber material as a rubber material of coating rubber of the carcass layer 11 enhances adhesion between the rubber layer 13 and the carcass layer 11.

Next, a method for manufacturing a pneumatic tire according to another embodiment of the present disclosure will be described. The method for manufacturing a pneumatic tire according to the present embodiment is suitably applicable for obtaining the pneumatic tire described above. A case where the pneumatic tire 10 of the foregoing embodiment is manufactured will therefore be described as an example thereof, in which the same reference numerals will be assigned to the same members of the pneumatic tire 10 described above and detailed explanations thereof will be omitted.
The pneumatic tire 10 of the foregoing embodiment can be manufactured by, for example: winding the inner liner layer 12 formed by a resin film (a thermoplastic resin processed to be a film-like shape), the composite layer 14, a chafer layer, the carcass layer 11, a belt, a tread portion, and the like onto a tire-building drum in a laminated manner; setting an unvulcanized tire thus obtained by the tire-building process in a mold and expanding and deforming the tire by shaping; and heating the tire with pressing it against a molding surface of the mold by the vulcanization process.

In the tire-building process, the respective ends in the tire circumferential direction of the composite layer 14 are jointed in the tire circumferential direction in an overlapping manner, to form the joint portion 15 of the composite layer 14. In this connection, the lower composite layer 14a in which the edge of the rubber layer 13 is formed to have a slant face is jointed with the upper composite layer 14b in a state where the respective end portions in the tire circumferential direction of these composite layers overlap with each other.

FIG. 2 is an explanatory view showing a cross section in the tire circumferential direction of a tire circumferential direction end face of the rubber layer of the lower composite layer, prior to the lower composite layer being overlapped by the upper composite layer at the joint portion as shown in FIG. 1. The rubber layer 13 (precisely, the lower rubber layer 13a) of the lower composite layer 14a situated on the lower side of the overlapping end portions of the lower composite layer 14a and the upper composite layer 14b has a tire circumferential direction end face extending in the tire width direction in a state prior to the lower composite layer 14a being overlapped by the upper composite layer 14b. The tire circumferential direction end face of the lower rubber layer 13a is formed to be a slant face slanting from the lower edge of the rubber layer 13a, on the outer side in the tire circumferential direction (the direction of the imaginary extension of the lower inner liner), toward the outer side in the tire radial direction, as shown in FIG. 2. The slant face is formed such that an angle α formed by the slant face with respect to the tire inner surface (the imaginary extension of the lower inner liner) is an acute angle, e.g. 30°.

The lower composite layer 14a and the upper composite layer 14b thus jointed in an overlapping manner are subjected to vulcanization, whereby after the vulcanization the lower rubber layer 13a exists between the first end 16 and the upper inner liner layer 12b in a state where the lower rubber layer 13a is exposed on the tire inner surface side in a region corresponding to the imaginary extension of the lower inner liner layer 12a.
The angle formed by the slant face as an edge of the rubber layer 13 of the lower composite layer 14a, with respect to the imaginary extension of the lower inner liner layer 12a (the rubber layer 13), is not restricted to 30° and may be any angle in the range of 15° to 90°.

### EXAMPLES

Test tires of the pneumatic tire according to the present disclosure were prepared for four types of Examples, in each of which the distance T is 10 mm or 20 mm and the distance L is equal to or less than 10% of the distance T. Air-sealing properties of each Example was compared with air-sealing properties of four types of Comparative Examples. The relationship between (the distance T [mm] : the distance L [mm]) in these Examples and Comparative Examples are as follows. Example 1 (10 : 0.5), Example 2 (10 : 2), Example 3 (20 : 0.5), Example 4 (20 : 2), Comp. Example 1 (10 : 0), Comp. Example 2 (10 : 3), Comp. Example 3 (40 : 0.5), Comp. Example 4 (40 : 2).

(1) Essential conditions in terms of air-sealing properties Airtightness in the air passage (indicated by arrow **a** in FIG. 1) through the lower rubber layer 13a interposed between the lower inner liner layer 12a and the upper inner liner layer 12b in the joint portion of these two inner liner layers, to a region between the first end 16 and the position P (the region corresponding to the distance L), must be equivalent to or better than airtightness in a conventional rubber inner liner.
Provided that the airtightness INDEX of the rubber inner liner and that of the lower rubber layer 13a (gauge thereof in the tire radial direction: 0.4 mm) are 100 and 4.44, respectively, the amount of joint, required in order to ensure airtightness equivalent to that of the rubber inner liner, is 0.4 (mm) × 100/4.44 = 9.0 (mm). Accordingly, it suffices to set (T - L/2) to be at least 9 mm, i.e. such that (T - L/2 ≥ 9 mm).

Table 1 shows respective values of (T - L/2) for various values of the distance T (5, 10, 20, 40 [mm]) vs. various values of the distance L (0, 0.5, 1.5, 2, 3 [mm]) in the form of a matrix. When the distance L is 0 [mm], the lower inner liner layer 12a and the upper inner liner layer 12b are in contact with each other and the escape passage a for residual air is blocked.

**[Table 1]**

| | | T [mm] | | | |
|---|---|---|---|---|---|
| | | 5 | 10 | 20 | 40 |
| L [mm] | 0 | 5.0 | 10.0 | 20.0 | 40.0 |
| | 0.5 | 4.8 | 9.8 | 19.8 | 39.8 |
| | 1.5 | 4.3 | 9.3 | 19.3 | 39.3 |
| | 2 | 4.0 | 9.0 | 19.0 | 39.0 |
| | 3 | 3.5 | 8.5 | 18.5 | 38.5 |

### (2) Occurrence rate of residual air

Whether residual air reservoir was formed or not was examined for ten tires in each of the combinations of the distance T values (5, 10, 20, 40 [mm]) and the distance L values (0, 0.5, 1.5, 2, 3 [mm]), to determine the proportion of the tires which exhibited wrinkles in the case. The respective occurrence rates of residual air thus obtained are shown in Table 2. A tire which exhibited even a single wrinkle, i.e. formation of residual air reservoir, was regarded as a defective tire. Occurrence rate of residual air "0%" in Table 2 indicates that no test tire exhibited formation of residual air reservoir, i.e. the proportion of defective tires was zero.

**Table 2**

| | | T [mm] | | | |
|---|---|---|---|---|---|
| | | 5 | 10 | 20 | 40 |
| L [mm] | 0 | 100 % | 100 % | 100 % | 100 % |
| | 0.5 | 0 % | 0 % | 0 % | 40 % |
| | 1.5 | 0 % | 0 % | 0 % | 30 % |
| | 2 | 0 % | 0 % | 0 % | 30 % |
| | 3 | 0 % | 0 % | 0 % | 30 % |

### (3) Comprehensive evaluation "(T - L/2) : Occurrence rate of residual air"

As the comprehensive evaluation of the results, the evaluation results of "T - L/2" and "Occurrence rate of residual air" were tabulated together by using two types of symbols "o" and "×" in Table 3 for each of the combinations of the distance T values (5, 10, 20, 40 [mm]) and the distance L values (0, 0.5, 1.5, 2, 3 [mm]) such that the symbol on the left indicates whether the T, L combination satisfies a condition of "T - L/2 ≥ 9 mm" → "o" or not → "×" and the symbol on the right indicates whether the T, L combination satisfies a condition of "the occurrence rate of residual air is 0%" → "○" or not → "×". The symbol "o" represents that the product is satisfactory and the symbol "×" represents that the product is defective.

In respect of the results of the comprehensive evaluation, it is understood from Table 3 that Examples 1-4 each representing the pneumatic tire of the present disclosure unanimously ensured the air-sealing properties at least equivalent to those of the conventional rubber inner liner. Further, none of Examples 1-4 exhibited occurrence of residual air.

**[Table 3]**

| | | T [mm] | | | |
|---|---|---|---|---|---|
| | | 5 | 10 | 20 | 40 |
| L [mm] | 0 | × : × | ○ : × | ○ : × | ○ : × |
| | | | Comp. Ex. 1 | | |
| | 0.5 | × : ○ | ○ : ○ | ○ : ○ | ○ : × |
| | | | Example 1 | Example 3 | Comp. Ex. 3 |
| | 1.5 | × : ○ | ○ : ○ | ○ : ○ | ○ : × |
| | 2 | × : ○ | ○ : ○ | ○ : ○ | ○ : × |
| | | | Example 2 | Example 4 | Comp. Ex. 4 |
| | 3 | × : ○ | × : ○ | ○ : ○ | ○ : × |
| | | | Comp. Ex. 2 | | |

### REFERENCE SIGNS LIST

- 10: Pneumatic tire
- 11: Carcass layer
- 12: Inner liner layer
- 12a: Lower inner liner layer
- 12b: Upper inner liner layer
- 13: Rubber layer
- 13a: Lower rubber layer
- 13b: Upper rubber layer
- 14: Composite layer
- 14a: Lower composite layer
- 14b: Upper composite layer
- 15: Joint portion
- 16: First edge
- 17: Second edge

## Claims

1. A pneumatic tire (10) having a carcass layer (11) extending across a pair of bead cores and an inner liner layer (12) formed of a thermoplastic resin and provided on the tire inner surface side of the carcass layer (11), wherein:
the inner liner layer (12) and a rubber layer (13) provided on the side facing the carcass layer (11), of the inner liner layer (12), form a composite layer (14) in combination;
respective end portions in the tire circumferential direction of the composite layer (14) are jointed in the tire circumferential direction in an overlapping manner at a joint portion (15) of the composite layer (14);
a lower inner liner layer (12a), situated on the lower side or the tire inner surface side of the overlapping end portions of the composite layer (14), has a first edge (16) at the joint portion (15);
an upper inner liner layer (12b), situated on the upper side of the overlapping end portions of the composite layer (14), has a second edge (17) at the joint portion (15);
the first edge (16) of the lower inner liner layer (12a) is separated from the upper inner liner layer (12b) by the rubber layer (13);
**characterized in that** a position in the tire circumferential direction on the upper inner liner layer (12b) at the same height in the tire radial direction as the lower inner liner layer (12a), at which position the upper inner liner layer (12b) is closest to the first edge (16) of the lower inner liner layer (12a), is "P", a distance in the tire circumferential direction measured from the first edge (16) to the position P is "L", and a distance in the tire circumferential direction measured from the second edge (17) to the position P is "T", T ≤ 35 mm, T -L/2 ≥ 9 mm, and 0 × T < L ≤ 0.2 × T.

2. The pneumatic tire (10) of claim 1, wherein, provided that a gauge in the tire radial direction of the rubber layer (13) is "A", the gauge A is smaller than the distance L.

3. The pneumatic tire (10) of claim 1 or 2, wherein the distance L is 1 mm or less.

4. The pneumatic tire of any of claims 1 to 3, wherein, provided that a gauge in the tire radial direction of the rubber layer (13) is "A", the gauge A is 0.5 mm or less.

5. The pneumatic tire (10) of any of claims 1 to 4, wherein the rubber layer (13) is formed of the same rubber material as a rubber material constituting coating rubber of the carcass layer (11).

6. The pneumatic tire (10) of any of claims 1 to 5, wherein the distance T is equal to or larger than 10 mm.

7. A method for manufacturing a pneumatic tire (10) having a carcass layer (11) extending across a pair of bead cores and an inner liner layer (12) formed of a thermoplastic resin and provided on the tire inner surface side of the carcass layer (11), wherein:
the inner liner layer (12) and a rubber layer (13) provided on the side facing the carcass layer (11), of the inner liner layer (12), form a composite layer (14) in combination, and respective end portions in the tire circumferential direction of the composite layer (14) are jointed in the tire circumferential direction in an overlapping manner at a joint portion (15);
a lower inner liner layer (12a), situated on the lower side or the tire inner surface side of the overlapping end portions of the composite layer (14), has a first edge (16) at the joint portion (15);
an upper inner liner layer (12b), situated on the upper side of the overlapping end portions of the composite layer (14), has a second edge (17) at the joint portion (15); and
the first edge (16) of the lower inner liner layer (12a) is separated from the upper inner liner layer (12b) by the rubber layer (13), wherein
when the overlapping end portions of the composite layer (14) at the joint portion (15) is constituted of the lower composite layer (14a) situated on the lower side or the tire inner surface side and the upper composite layer (14b) situated on the upper side, the method comprises:
forming an end face of the rubber layer (13) of the lower composite layer (14a) to be a slant face slanting from a lower edge of the rubber layer (13), on the outer side in the tire circumferential direction, toward the outer side in the tire radial direction; and
subjecting the tire to vulcanization in a state where the upper composite layer (14b) overlaps with the lower composite layer (14a), to form the joint portion (15), **characterised in that**:
a position in the tire circumferential direction on the upper inner liner layer (12b) at the same height in the tire radial direction as the lower inner liner layer (12a), at which position the upper inner liner layer (12b) is closest to the first edge (16) of the lower inner liner layer (12a), is "P", a distance in the tire circumferential direction measured from the first edge (16) to the position P is "L", and a distance in the tire circumferential direction measured from the second edge (17) to the position P is "T", T ≤ 35 mm, T -L/2 ≥ 9 mm, and 0 × T < L ≤ 0.2 × T..

## Patentansprüche

1. Luftreifen (10) mit einer Karkassenschicht (11), die sich über ein Paar Wulstkerne und eine innere Auskleidungsschicht (12) erstreckt, die aus einem thermoplastischen Harz ausgebildet ist und auf der Reifeninnenflächenseite der Karkassenschicht (11) bereitgestellt ist, wobei:
die innere Auskleidungsschicht (12) und eine Gummischicht (13), die an der Seite bereitgestellt ist, die der Karkassenschicht (11) der inneren Auskleidungsschicht (12) zugewandt ist, in Kombination eine Verbundschicht (14) ausbilden;
entsprechende Endabschnitte in der Reifenumfangsrichtung der Verbundschicht (14) in der Reifenumfangsrichtung auf eine sich überlappende Weise an einem Verbindungsabschnitt (15) der Verbundschicht (14) verbunden sind;
eine untere innere Auskleidungsschicht (12a), die sich an der unteren Seite oder der Reifeninnenflächenseite der sich überlappenden Endabschnitte der Verbundschicht (14) befindet, eine erste Kante (16) an dem Verbindungsabschnitt (15) aufweist;
eine obere innere Auskleidungsschicht (12b), die sich an der oberen Seite der sich überlappenden Endabschnitte der Verbundschicht (14) befindet, eine zweite Kante (17) an dem Verbindungsabschnitt (15) aufweist;
die erste Kante (16) der unteren inneren Auskleidungsschicht (12a) durch die Gummischicht (13) von der oberen inneren Auskleidungsschicht (12b) getrennt ist;
**dadurch gekennzeichnet, dass** eine Position in der Reifenumfangsrichtung an der oberen inneren Auskleidungsschicht (12b) an der gleichen Höhe in der radialen Reifenrichtung wie die untere innere Auskleidungsschicht (12a), an welcher Position die obere innere Auskleidungsschicht (12b) der ersten Kante (16) der unteren inneren Auskleidungsschicht (12a) am nächsten ist, "P" ist, ein Abstand in der Reifenumfangsrichtung, der von der ersten Kante (16) zu der Position P gemessen wird, "L" ist, und ein Abstand in der Reifenumfangsrichtung, der von der zweiten Kante (17) zu der Position P gemessen wird, "T" ist, wobei T ≤ 35 mm, T -L/2 ≥ 9 mm und 0 x T < L ≤ 0,2 x T.

2. Luftreifen (10) nach Anspruch 1, wobei, vorausgesetzt, dass ein Maß in der radialen Reifenrichtung der Gummischicht (13) "A" ist, das Maß A kleiner als der Abstand L ist.

3. Luftreifen (10) nach Anspruch 1 oder 2, wobei der Abstand L 1 mm oder kleiner ist.

4. Luftreifen nach einem der Ansprüche 1 bis 3, wobei, vorausgesetzt, dass ein Maß in der radialen Reifenrichtung der Gummischicht (13) "A" ist, das Maß A 0,5 mm oder kleiner ist.

5. Luftreifen (10) nach einem der Ansprüche 1 bis 4, wobei die Gummischicht (13) aus dem gleichen Gummimaterial wie ein Gummimaterial ausgebildet ist, das den Beschichtungsgummi der Karkassenschicht (11) bildet.

6. Luftreifen (10) nach einem der Ansprüche 1 bis 5, wobei der Abstand T gleich oder größer als 10 mm ist.

7. Verfahren zum Herstellen eines Luftreifens (10) mit einer Karkassenschicht (11), die sich über ein Paar Wulstkerne und eine innere Auskleidungsschicht (12) erstreckt, die aus einem thermoplastischen Harz ausgebildet ist und auf der Reifeninnenflächenseite der Karkassenschicht (11) bereitgestellt ist, wobei:
die innere Auskleidungsschicht (12) und eine Gummischicht (13), die an der Seite bereitgestellt ist, die der Karkassenschicht (11) der inneren Auskleidungsschicht (12) zugewandt ist, in Kombination eine Verbundschicht (14) ausbilden und entsprechende Endabschnitte in der Reifenumfangsrichtung der Verbundschicht (14) in der Reifenumfangsrichtung auf eine sich überlappende Weise an einem Verbindungsabschnitt (15) verbunden sind;
eine untere innere Auskleidungsschicht (12a), die sich an der unteren Seite oder der Reifeninnenflächenseite der sich überlappenden Endabschnitte der Verbundschicht (14) befindet, eine erste Kante (16) an dem Verbindungsabschnitt (15) aufweist;
eine obere innere Auskleidungsschicht (12b), die sich an der oberen Seite der sich überlappenden Endabschnitte der Verbundschicht (14) befindet, eine zweite Kante (17) an dem Verbundabschnitt (15) aufweist; und
wobei die erste Kante (16) der unteren inneren Auskleidungsschicht (12a) durch die Gummischicht (13) von der oberen inneren Auskleidungsschicht (12b) getrennt ist, wobei,
wenn die sich überlappenden Endabschnitte der Verbundschicht (14) an dem Verbindungsabschnitt (15) aus der unteren Verbundschicht (14a), die sich auf der unteren Seite befindet oder der Reifeninnenflächenseite befindet, und der oberen Verbundschicht (14b) bestehen, die sich auf der oberen Seite befinden, das Verfahren Folgendes umfasst:
Ausbilden einer Endfläche der Gummischicht (13) der unteren Verbundschicht (14a) zu einer abgeschrägten Fläche, die von einer unteren Kante der Gummischicht (13) an der Außenseite in der Reifenumfangsrichtung zu der Außenseite in der radialen Reifenrichtung abgeschrägt ist; und
Unterwerfen des Reifens einer Vulkanisation in einem Zustand, in dem sich die obere Verbundschicht (14b) mit der unteren Verbundschicht (14a) überlappt, um den Verbundabschnitt (15) auszubilden, **dadurch gekennzeichnet, dass**:
eine Position in der Reifenumfangsrichtung an der oberen inneren Auskleidungsschicht (12b) an der gleichen Höhe in der radialen Reifenrichtung wie die untere innere Auskleidungsschicht (12a), an welcher Position die obere innere Auskleidungsschicht (12b) der ersten Kante (16) der unteren inneren Auskleidungsschicht (12a) am nächsten ist, "P" ist, ein Abstand in der Reifenumfangsrichtung, der von der ersten Kante (16) zu der Position P gemessen wird, "L" ist, und ein Abstand in der Reifenumfangsrichtung, der von der zweiten Kante (17) zu der Position P gemessen wird, "T" ist, wobei T ≤ 35 mm, T -L/2 ≥ 9 mm und 0 x T < L ≤ 0,2 x T.

## Revendications

1. Pneu (10) présentant une couche de carcasse (11) s'étendant sur une paire de tringles de talon et une couche de revêtement intérieur (12) formée d'une résine thermoplastique et fournie sur le côté surface intérieure de pneu de la couche de carcasse (11), dans lequel :
la couche de revêtement intérieur (12) et une couche de caoutchouc (13), fournie sur le côté regardant vers la couche de carcasse (11) de la couche de revêtement intérieur (12), forment une couche composite (14) en combinaison ;
des parties extrémité respectives dans la direction circonférentielle de pneu de la couche composite (14) sont réunies dans la direction circonférentielle de pneu de manière chevauchante au niveau d'une partie joint (15) de la couche composite (14) ;
une couche de revêtement intérieur inférieure (12a), située sur le côté inférieur ou sur le côté surface intérieure de pneu des parties extrémité se chevauchant de la couche composite (14), présente un premier bord (16) au niveau de la partie joint (15) ;
une couche de revêtement intérieur supérieure (12b), située sur le côté supérieur des parties extrémité se chevauchant de la couche composite (14), présente un deuxième bord (17) au niveau de la partie joint (15) ;
le premier bord (16) de la couche de revêtement intérieur inférieure (12a) est séparée de la couche de revêtement intérieur supérieure (12b) par la couche de caoutchouc (13) ;
**caractérisé en ce qu'**une position dans la direction circonférentielle de pneu sur la couche de revêtement intérieur supérieure (12b) à la même hauteur dans la direction radiale de pneu que la couche de revêtement intérieur inférieure (12a), la couche de revêtement intérieur supérieure (12b) étant la plus proche du premier bord (16) de la couche de revêtement intérieur inférieure (12a) au niveau de ladite position, est notée « P », une distance dans la direction circonférentielle de pneu mesurée entre le premier bord (16) et la position P est notée « L », et une distance dans la direction circonférentielle de pneu mesurée entre le deuxième bord (17) et la position P est notée « T », T ≤ 35 mm, T - L/2 ≥ 9 mm, et 0 × T < L ≤ 0,2 × T.

2. Pneu (10) selon la revendication 1, dans lequel, sous réserve qu'une épaisseur dans la direction radiale de pneu de la couche de caoutchouc (13) est notée « A », l'épaisseur A est inférieure à la distance L.

3. Pneu (10) selon la revendication 1 ou 2, dans lequel la distance L est inférieure ou égale à 1 mm.

4. Pneu selon l'une quelconque des revendications 1 à 3, dans lequel, sous réserve qu'une épaisseur dans la direction radiale de pneu de la couche de caoutchouc (13) est notée « A », l'épaisseur A est inférieure ou égale à 0,5 mm.

5. Pneu (10) selon l'une quelconque des revendications 1 à 4, dans lequel la couche de caoutchouc (13) est formée du même matériau de caoutchouc qu'un matériau de caoutchouc constituant le caoutchouc de revêtement de la couche de carcasse (11).

6. Pneu (10) selon l'une quelconque des revendications 1 à 5, dans lequel la distance T est supérieure ou égale à 10 mm.

7. Procédé de fabrication d'un pneu (10) présentant une couche de carcasse (11) s'étendant sur une paire de tringles de talon et une couche de revêtement intérieur (12) formée d'une résine thermoplastique et fournie sur le côté surface intérieure de pneu de la couche de carcasse (11), dans lequel :
la couche de revêtement intérieur (12) et une couche de caoutchouc (13), fournie sur le côté regardant vers la couche de carcasse (11) de la couche de revêtement intérieur (12), forment une couche composite (14) en combinaison, et des parties extrémité respectives dans la direction circonférentielle de pneu de la couche composite (14) sont réunies dans la direction circonférentielle de pneu de manière chevauchante au niveau d'une partie joint (15) ;
une couche de revêtement intérieur inférieure (12a), située sur le côté inférieur ou sur le côté surface intérieure de pneu des parties extrémité se chevauchant de la couche composite (14), présente un premier bord (16) au niveau de la partie joint (15) ;
une couche de revêtement intérieur supérieure (12b), située sur le côté supérieur des parties extrémité se chevauchant de la couche composite (14), présente un deuxième bord (17) au niveau de la partie joint (15) ; et
le premier bord (16) de la couche de revêtement intérieur inférieure (12a) est séparé de la couche de revêtement intérieur supérieure (12b) par la couche de caoutchouc (13), dans lequel
lorsque les parties extrémité se chevauchant de la couche composite (14) au niveau de la partie joint (15) sont constituées de la couche composite inférieure (14a) située sur le côté inférieur ou sur le côté surface intérieure de pneu et de la couche composite supérieure (14b) située sur le côté supérieur, le procédé comprend les étapes consistant à :
former une face terminale de la couche de caoutchouc (13) de la couche composite inférieure (14a) de manière à ce qu'elle forme une face biseau inclinée à partir d'un bord inférieur de la couche de caoutchouc (13), sur le côté extérieur dans la direction circonférentielle de pneu, en direction du côté extérieur dans la direction radiale de pneu ; et
soumettre le pneu à une vulcanisation dans un état où la couche composite supérieure (14b) chevauche la couche composite inférieure (14a), afin de former la partie joint (15), **caractérisé en ce que** :
une position dans la direction circonférentielle de pneu sur la couche de revêtement intérieur supérieure (12b) à la même hauteur dans la direction radiale de pneu que la couche de revêtement intérieur inférieure (12a), la couche de revêtement intérieur supérieure (12b) étant la plus proche du premier bord (16) de la couche de revêtement intérieur inférieure (12a) au niveau de ladite position, est notée « P », une distance dans la direction circonférentielle de pneu mesurée entre le premier bord (16) et la position P est notée « L », et une distance dans la direction circonférentielle de pneu mesurée entre le deuxième bord (17) et la position P est notée « T », T ≤ 35 mm, T - L/2 ≥ 9 mm, et 0 × T < L ≤ 0,2 × T.
